# EUROPEAN PATENT APPLICATION

(11) **EP 3 981 535 A1**
(43) Date of publication of application: **13.04.2022**
(21) Application number: 20020465.9
(22) Date of filing: 08.10.2020
(51) Int. Cl.: B23K 9/00, B08B 7/00, B23K 9/167, B23K 9/29

(54) **SHIELD NOZZLES FOR CATHODIC CLEANING OF MATERIALS AND FOR T-JOINT WELDING**

(71) Applicant: Linde GmbH, 82049 Pullach (DE)
(72) Inventor: Siewert, Erwan, 85283 Niederlauterbach (DE); Hussary, Nakhleh A., 85737 Ismaning (DE); Fehrenbach, Lukas, 85716 Unterschleißheim (DE); Pfreuntner, Tobias, 85716 Unterschleißheim (DE)
(74) Representative: Lu, Jing

(57) **Abstract**

The present invention relates to a welding torch (10), comprising an electrode (12) extending along a centre axis (60), and a circumferential shield (20) which surrounds the electrode (12) and which is coaxially arranged with respect to the electrode (12), wherein the shield (20) comprises a circumferential edge region (22) that delimits an orifice (24) of the welding torch (10) through which a shield gas can be directed onto a work piece (40). According to the present invention, the shield (20) comprises at least a first recess (30) delimited by a section (32) of the edge region (22). Furthermore, the present invention relates to a method using such a welding torch (10).

## Description

The present invention relates to a welding torch as well as to method for processing at least one workpiece using such a welding torch.

Welding torches are used for welding as well as for cathodic arc cleaning. The present invention relates to both applications.

Welding is a process that e.g. joins two workpieces such that they are integrally bonded. This is realised by generating an area of molten material where both workpieces interblend. After cooling, the two work pieces are connected. To melt the material, an energy source to generate heat is required. Typical energy sources for welding are electric arcs, lasers, gas flames, electron beams as well as friction.

Particularly, the workpieces are made of a metal. It is possible to weld two workpieces together that are formed out of the same metal, but also workpieces made from different metals can be welded. In addition to melting the material of the workpieces, welding can be facilitated by adding a filler material.

The plus pole variant of gas tungsten arc welding (GTAW), wherein the electrode of the electrode comprises positive polarity while the workpiece comprises negative polarity, can be applied for both welding as well as (cathodic arc) cleaning. With respect to welding, GTAW is commonly used to weld aluminium, magnesium and copper alloys as well as stainless steel, but could in general be applied to almost all metals. GTAW uses a tungsten electrode which is not consumed during the welding or cleaning process and which is surrounded by a shield. The shield protects the electrode and directs a shielding gas to the working area. The shielding gas may be comprised of an inner shielding gas flow for focussing the arc as well as a surrounding outer shielding gas flow.

Most materials require a specific preparation before the actual welding process in order to achieve a proper welding result. Particularly, aluminum surfaces naturally form an oxide layer. This oxide layer is detrimental to the welding process as it causes inclusions in the weld and compromises it. Therefore, before welding is performed on aluminum, the oxide layer must be removed. For removing such an oxide layer, a number of methods are used in the prior art such as mechanical methods, chemical methods and electrical methods. Furthermore, cleaning the workpiece using a cathodic arc (i.e. so-called plus pole cleaning) is a very effective and can be easily controlled via adjusting the applied current level and the translation velocity of the used welding torch.

However, when cleaning the edge of a plate or a pipe, one often recognizes a black oxide at the edges of the cleaned surfaces. Similarly, the coverage of the area by shielding gas from the torch is an issue if the operator does not pay close attention and may require the operator to do the cleaning on all three sides (butt edge, top and bottom of a plate and in the case of a pipe: edge, inside and outside surface around the weld joint). This means added time.

Particularly, regarding the task of cathodic arc cleaning US3248514 describes a cathodic arc cleaning electrode that ends in an inverted T-shape. Furthermore, US4434348 discloses cathodic cleaning of aluminum tubes, wherein an electrode is arranged such that it rotates about the tube.

Furthermore, particularly the necessity of cooling a welding torch often requires certain sizes of the components of the torch such as the shield to incorporate direct cooling into the torch. Apart form this, shields of welding torches generally suffer from the drawback that the shield cannot be moved arbitrarily close to the welding spot in case of so-called T-joint configurations where two workpieces that extend at an angle to one another (often 90°) have to be joined to one another by a welding seam.

Regarding shielding gas supply in such circumstances US5968375 discloses guiding the shielding gas through a non-circular orifice. Further, US2012/0125904 discloses generation of a diverging shielding gas flow. Furthermore, US4052632 relates to nozzles used in underwater welding.

Based on the above, it is an objective of the present invention to improve coverage of an area of at least one workpiece with a shielding gas that is to be processed by means of cathodic arc cleaning and/or welding.

The problem is solved by a welding torch having the features of claim 1 as well as by a method having the features of claim 12.

Preferred embodiments of these aspects of the present invention are stated in the corresponding sub claims and/or are described below.

According to claim 1 a welding torch is disclosed, comprising:
- an electrode extending along a centre axis (e.g. a longitudinal axis), and
- a circumferential shield which surrounds the electrode and which is coaxially arranged with respect to the electrode (or centre axis), wherein the shield comprises a circumferential edge region that delimits an orifice of the torch through which a shield gas can be directed onto a work piece.

According to the present invention, the shield comprises at least a first recess defined by a section of the edge region. Particularly, said at least one first recess thus connects an outside of the shield to an inside of the shield, which inside faces the electrode surrounded by the shield (i.e. the at least one first recess extends through the shield in a radial direction of the shield). Furthermore, said section of the edge region comprises a transversal portion extending in a peripheral direction of the shield (and particularly in a plane perpendicular to said centre axis) and two longitudinal portions connected via the transversal portion, which longitudinal portions extend along the centre axis (or perpendicular to the transversal portion).

Alternatively, according to the present invention, the shield comprises at least a first recess defined by a section of the edge region, wherein said section of the edge region is arch-shaped and comprises a concave curvature.
Particularly, said edge region of the shield comprises a circular shape at least in sections of the edge region (e.g. apart from the first recess and particularly apart from a second recess, see below formed into the edge region of shield).

Due to the design of the shield according to the present invention the coverage of the shielding gas during the cleaning of edge regions of plates and pipes for butt, overlap and T-joint configurations can be improved. Particularly, full coverage is present and no oxygen from the atmosphere is trapped in the cleaning area disrupting the cleaning process.

Furthermore, the design according to the present invention also allows the torch/shield to extend further towards the center of a T-joint to be welded without interfering with the workpieces to be connected.

Further particularly, the welding torch is configured for gas tungsten arc welding (GTAW), i.e., the electrode is particularly formed out of tungsten and particularly - when a direct current is used to generate the arc - comprises positive polarity while the workpiece comprises negative polarity. However, the present invention can also be used in the context of AC. Particularly, the welding torch can be configured to direct an inner shield gas flow surrounding the electrode onto the workpiece which inner shield gas flow focusses the arc as well as an outer shield gas flow comprising a different gas composition which outer shield gas flow surrounds the inner shield gas flow and the electrode.

However, the present invention may also be used for other welding processes, particularly GTAW processes, as well. Similarly, the present invention may also be applied to manual, automated, or robotic applications.

According to an embodiment of the welding torch according to the present invention, the shield comprises a second recess delimited (or defined) by a further section of the edge region, wherein the second recess faces the first recess in a direction extending orthogonal to the centre axis.

Further, according to an embodiment of the welding torch according to the present invention, the first recess forms a single recess (i.e. the only recess of the shield arranged at the edge region) delimited (or defined) by the section of said edge region of the shield.

Further, according to an embodiment of the welding torch according to the present invention, said further section of the edge region comprises a transversal portion extending in a peripheral direction of the shield (and particularly in a plane perpendicular to said centre axis) and two longitudinal portions connected via the transversal portion of the further section, which longitudinal portions of the further section extend along the centre axis (or perpendicular to the transversal portion of the second section).

Further, according to an embodiment of the welding torch according to the present invention, said at least one first recess is formed as a slot.

Furthermore, according to an embodiment of the welding torch according to the present invention, also said second recess may be formed as a slot.

In an embodiment, a slot extends parallel to the centre axis of the electrode. In an embodiment, the slot is delimited by the transversal portion and the longitudinal portions.

Furthermore, according to an embodiment of the welding torch according to the present invention, the two recesses (or slots) comprise the same width in the peripheral direction of the shield and/or the same depth along the centre axis of the electrode/shield.

The depth of the recesses/slots is chosen to control two offsets, namely the distance between the electrode, in particular a tip of the electrode, and the aluminium or workpiece surface to be cleaned, and furthermore the distance the shield extends beyond the surface being cleaned. The tip of the electrode can be the most distal point of the electrode.

In an embodiment, the width of the first recess and the width of the second recess are determined by the lengths of the transversal portion of the section of the edge and the transversal portion of the further section of the edge, respectively. The width of the recesses can be in the range from 0.1mm to 25mm, in particular from 1mm to 12mm.

The depth of the recesses can be determined by the longitudinal portions of the respective recesses. In an embodiment, the depth is in the range from 0.5mm to 10mm, particularly in the range from 1 mm and 5 mm.

According to an embodiment of the welding torch according to the present invention, the shield is configured such that in a direction extending along the centre axis, the shield extends beyond the electrode. In other words, this means that the shield, in particular the edge region of the shield, can comprise the most distal point of the welding torch.

The torch can be configured such that when the torch is positioned at a workpiece, the shield can extend beyond the work piece while the electrode can be positioned above the workpiece. In an embodiment, the electrode is positioned above a part of the workpiece that can be cleaned by means of the torch.

Two advantages are achieved with the present invention over the prior art. The constant spacing between the electrode and the workpiece guarantees consistent and repeatable cleaning results. Further, the extension of the shield beyond the work piece ensures that inert shielding gas covers the full cleaning surface and any flow pattern that may develop due to the various edges in the flow stream is not causing entrainment of atmospheric gas and thereby oxidation of the surface to be cleaned.

Furthermore, according to an embodiment of the welding torch according to the present invention, the at least one first recess is configured to receive an edge region of a workpiece. Particularly, the torch/shield can be moved along the workpiece to clean its edge region while maintaining engagement with the at least one recess.

Alternatively, in case two opposing recesses (e.g. slots) are present, the two recesses/slots are configured to receive an edge region of a workpiece so that the shield can be translated along said edge region of the workpiece while maintaining engagement of the workpiece with said two recesses. The term "opposing recesses" can refer to two recesses facing each other.

Furthermore, according to an embodiment of the welding torch according to the present invention, the first section of the edge region comprises a concave curvature. This is particularly useful for generating a bevelled shield that can be moved closer to the welding spot in case of T-joints and similar applications.

Particularly, here, the section of the edge region defining the at least one recess extends in an extension plane that encloses an acute angle with the centre axis so that the shield tapers.

Also, here, the shield preferably comprises a second opposing recess, wherein the further section of the edge region defining the further second recess is preferably also arch-shaped and comprises a concave curvature. Particularly, according to an embodiment, the further section of the edge region extends in a further extension plane that also encloses an acute angle with the centre axis so that the shield tapers on both sides.

Particularly, said extension plane and said further extension plane enclose an angle that corresponds to the angle enclosed by two workpieces that are to be joined by a welding seam to achieve a T-joint (see also below).

Furthermore, according to an embodiment of the welding torch according to the present invention, the acute angle and the acute further angle each lie in the range from 25° to 75°, in particular from 35° to 65°, in particular from 40° to 50°. Particularly, the acute angle and the acute further angle are identical. In an embodiment, the angle and the further angel each amount to 45°. This allows to perfectly weld T-joints where the two workpieces extend at an angle of 90° with respect to one another.

According to an embodiment of the welding torch, the shield is configured such that in a direction extending along the centre axis, the electrode, in particular the tip of the electrode, extends beyond the edge region of the shield. In an embodiment, the electrode comprises the most distal point of the welding torch. In other words, this means that the electrode can stick out of the shield (in a direction extending along the centre axis).

According to yet another aspect of the present invention, a method for processing (e.g. cleaning and/or welding) at least one workpiece using a welding torch according to the present invention is disclosed, wherein the shield of the welding torch is positioned with respect to the at least one work piece such that the at least one workpiece engages with the at least one first recess or such that said section of the edge region extends along or parallel to a surface of the at least one workpiece (e.g. for a T-joint application), and wherein a shield gas is discharged via the orifice of the welding torch onto the at least one workpiece, and an arc discharge is generated between the welding electrode and the work piece (e.g. for cathodic arc cleaning or welding).

Particularly, a direct current is used to generate the arc. Further, according to an embodiment, the electrode comprises a positive polarity (also denoted as DC+) while the at least one workpiece comprises a negative polarity. However, the electrode can also comprise a negative polarity (and the workpiece the opposite positive polarity) Particularly, cleaning using direct current with negative polarity (DC-) particularly has the advantages that uncontrolled spot attachments can be prevented, and changes of the micro structure can be voided.

Furthermore, according to yet another embodiment, an alternating current can be used to generate the arc.
Furthermore, the shielding gas can be comprised of an inner shielding gas flow surrounding the electrode for focussing the arc and an outer shielding gas flow surrounding the inner shielding gas flow and the electrode (see also above).

Particularly, according to an embodiment of the method according to the present invention, for cleaning the edge region of the at least one workpiece by means of the arc (e.g. when the electrode comprises positive polarity), the shield is moved along the edge region of the at least one workpiece while maintaining engagement of the edge region of the workpiece with the at least one first recess.

Particularly, according to an embodiment of the method according to the present invention, for cleaning the edge region of the at least one workpiece by means of the arc (e.g. when the electrode comprises positive polarity), the shield is moved along the edge region of the at least one workpiece while maintaining engagement of the edge region of the workpiece with the first recess (e.g. slot) and the second recess (e.g. slot).

According to a further embodiment of the method according to the present invention, two workpieces, a first workpiece and a second workpiece, that extend at an angle with respect to each other (particularly 90°) are welded to connect the workpieces to one another via a welding seam (to form e.g. a so-called T-joint). Particularly, each workpiece comprises a surface, wherein said surfaces enclose said angle.

Here, the shield is located such with respect to the two workpieces that the section of the edge region of the first recess extends along, particularly parallel, to said surface of the first workpiece while the further section of the edge region of the shield extends along, particularly parallel, to said surface of the second workpiece. Thus, particularly, the first recess faces the surface of the first workpiece while the second recess faces the surface of the second workpiece.

Due to fact that the shield is tapered due to the two opposing recesses of the shield, the shield can be arranged such with respect to the two workpieces that the electrode can have a proper distance to the welding seam to be formed while the shield does not collide with said surfaces of the workpieces, but can be arranged at a constant distance with respect to each workpiece/surface.

In order to guide the shield along the at least one workpiece (or along said two workpieces) upon cleaning or welding, the welding torch, particularly the shield, can comprise at least one wheel for contacting the at least one workpiece. The wheel can be configured to clamp the shield to the at least one workpiece. Furthermore, the welding torch or the shield can comprise a driving wheel for automatically moving the shield along the at least one workpiece (e.g. back and forth).

Furthermore, according to yet another aspect of the present invention, a welding system comprising a welding torch according to the present invention may comprise a sensor configured to measure a velocity of the welding torch or shield with respect to the at least one workpiece (to be cleaned or welded). Particularly, the welding system is configured to display the measured velocity to the operator.

Furthermore, the welding system may be configured to use the current and voltage signal from the arc generated by the welding torch as an indicator for a proper velocity of the welding torch / shield. Particularly, in case the velocity is too slow, the arc is moving out of an arc centre towards other oxides to be removed leading into an increase in the arc voltage.

Particularly, the welding system may be configured to display the proper velocity of the welding torch or shield to the operator, e.g. by means of an optical signal (e.g. by means of a green LED to indicate proper velocities and by means of a red LED to indicate velocities to the operator that are e.g. too fast).

Further features and embodiments of the present invention are described in the following with reference to the Figures, wherein:
- Figure 1: shows a perspective view of a shield of an embodiment of a welding torch according to the present invention, wherein the shield comprises two opposing concave recesses resulting in a bevelled shield that tapers;
- Figure 2: shows a lateral view of the shield according to Fig. 2 which is positioned adjacent two workpieces to be welded to form a T-joint, wherein due to the recesses the shield can be positioned sufficiently close to the workpieces;
- Figure 3: shows a perspective view of a shield of a further embodiment of a welding torch according to the present invention, wherein the shield comprises to opposing recesses in the form of slots, wherein an edge region of a workpiece engages with the recesses for achieving proper cathodic arc cleaning of the edge region of the workpiece
- Figure 4: shoes a cross sectional view of the situation shown in Figure 3;
- Figure 5: shows a shield of an embodiment of a welding torch according to the present invention wherein an edge region of a tubular workpiece (e.g. pipe) engages with the recesses/slots of the shield for the purpose of cleaning the edge region of the workpiece;
- Figure 6: shows a cross sectional view of the situation shown in Figure 5;
- Figure 7: shows a shield of a further embodiment of a welding torch according to the present invention comprising, wherein the shield comprises a single recess for engaging with an edge region of an e.g. flat plate-like workpiece; and
- Figure 8: shows a cross sectional view of the situation shown in Figure 7;

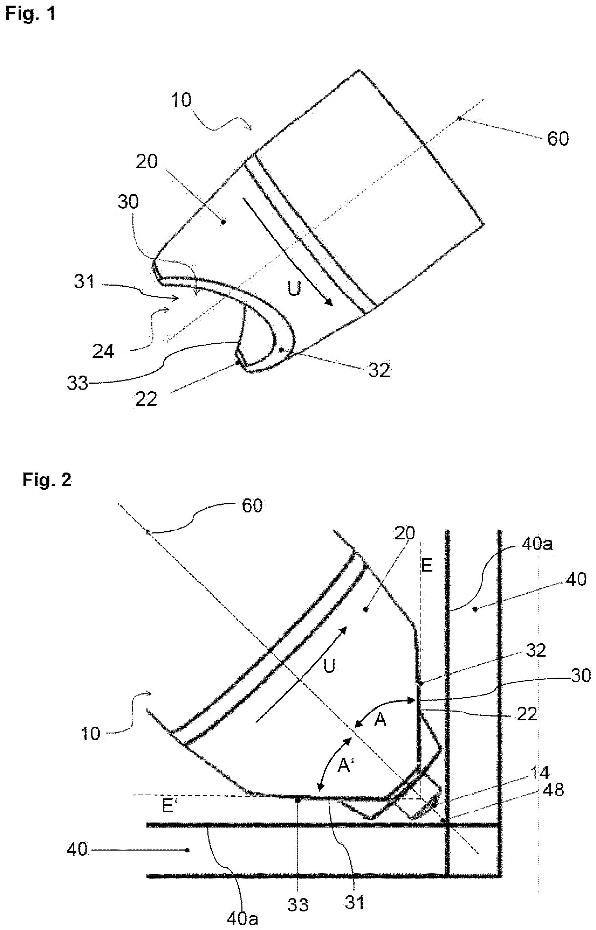

Figures 1 and 2 show embodiments of the shield 20/ welding torch 10 that can particularly be used for welding, in particular welding of plus pole polarity with non-consumable electrode, such as e.g. a tungsten electrode.

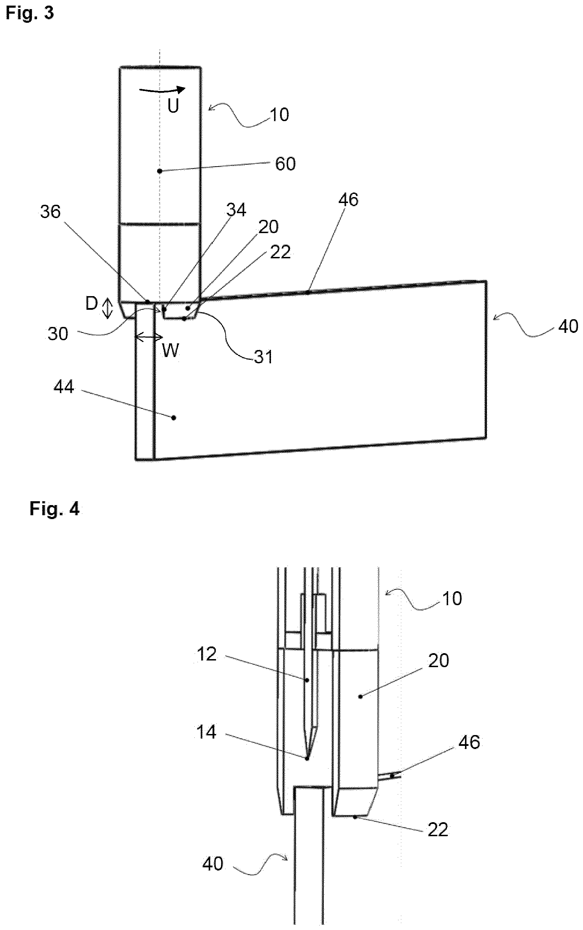

In Figures 3 - 8, welding torches 10 according to the invention are illustrated that can particularly be used for cleaning, in particular for cathodic arc cleaning with plus pole and non-consumable electrode, such as e.g. a tungsten electrode.

Figure 1 shows a shield 20 of a welding torch 10 according to the present invention. The shield 20 is formed as a circumferential member comprising a circumferential edge region 22 that delimits an orifice 24 of the welding torch 10 through which a shielding gas can be discharged towards the workpieces 40 to be welded.

In the shown embodiment, the shield 20 extends along a center axis 60 and surrounds an electrode 12 of the welding torch 10 that extends along the centre axis 60 as well. The shield 20 surrounds the electrode 12 (not shown in Fig. 1, cf. Fig. 2) in a coaxial fashion.

As shown in Fig. 1, the edge region 22 of the shield 20 comprises two opposing recesses 30, 31 that face each other and are each delimited by a section 32, 33 of the edge region 22. Particularly the recesses 30, 31 are formed symmetrically with respect to a symmetry plane containing the centre axis 60.

Said sections 32, 33 of the edge region 22 of the shield 20 comprise a concave shape, wherein the section 32 and the further section 33 each extend in an associated extension plane E, E', respectively, that encloses an acute angle A, A', respectively, with the centre axis 60, wherein here, as an example, these angles A, A' each amount to 45°. However, depending on the workpieces to be welded, particularly their orientation with respect each other, other angles A, A' are also possible.

Particularly, Figure 2 shows how the shield 20 described above is to be positioned with respect to two workpieces 40 that extend at an angle of 90° with respect to one another and shall be connected by a welding seam 48 extending along a corner defined by the two workpieces 40. Particularly, due to the bevelled shape of the shield 20 that results from the recesses 30, 31 of the shield 20, the shield 20 can be positioned close to the surfaces 40a of the workpieces. Particularly, the section 32 extends parallel to a surface 40a of one of the workpieces 40 while the further section 33 of the edge region 22 of the shield 20 extends parallel to a surface 40a of the other workpiece 40, as indicated in Figure 2. This allows achieving sufficient coverage with the shielding gas regarding the welding seam 48 to be fabricated.

For welding, a typical distance between the tip 14 of the electrode 12 and the workpieces 40 is in the range of e.g. 3 mm to 7 mm. In case the workpieces 40 are perpendicular to each other, a usual shield without recesses, where the electrode sticks out (i.e. extends beyond the shield 20 in a direction extending along the centre axis 60) in the range about 5 mm, would collide with the workpieces 40 before reaching a sufficient proximity of the tip 14 to the welding area, for example the corner defined by the two workpieces 40. This problem is avoided due to the design of the embodiment of the welding torch 10 according to the present invention as shown in Figs 1 and 2. Also in an embodiment of the welding torch 10 according to the invention, the electrode 12 can stick out of the shield 20 in a direction along the centre axis 60.

Figures 3 to 8 show further embodiments of welding torches 10 according to the present invention, which are particularly suitable for cathodic arc cleaning, particularly of workpieces 40 comprising surfaces made from an aluminium alloy. Figs 4, 6 and 8 illustrate that the shield 20 can extend beyond the electrode 12 in a direction along the centre axis 60. The edge region 22 of the shield 20 can comprise the most distal point of the shield20/welding torch 10.

Figure 3 and Figure 4 illustrate the positioning of the welding torch 10 comprising a shield 20 having two opposing recesses 30 (only first recess 30 is shown in Fig. 3) in the form of slots for receiving e.g. a straight edge region 46 of a workpiece 40 (e.g. a bar or plate). The shown embodiment of the welding torch 10 is in particular used to clean the edge region 46 of the workpiece 40. Particularly, each slot 30 is defined by a section 32 of the edge region 22 of the shield 20, which edge region surrounds the orifice 24 of the shield 20 / welding torch 10. Particularly, each section 32 comprises a transversal portion 36 extending in a peripheral direction U of the shield 20 and two longitudinal portions 34 connected via the transversal portion 36, which longitudinal portions 34 extend along the centre axis 60.

The enlarged cross-sectional view of Fig. 4 additionally shows the positioning of the welding electrode 12 above the edge region 46 to be cleaned. The shield 20 extends beyond the tip 14 of the electrode 12. The widths W of the recesses 30 in the peripheral direction U of the shield essentially corresponds to the width of the edge region 46 of the workpiece 46 so that the shield can slide along the edge region 46 when the edge region 46 is inserted into the recesses 30, 31. Particularly, the shield 20 is positioned such that it partially encloses the work piece 40 by fitting part of the workpiece 40, namely said edge region 46, into the recesses 30, 31. This enables the proper coverage of the work area with shielding gas and a constant distance between the tip 14 of the electrode 12 and the edge region 46 of the workpiece 40. Particularly, the distance between the tip 14 of the electrode 12 and the edge region 46 of the work piece 40 depends on the depth D of the recesses 30, 31 along the centre axis 60. The depths D of the recesses 30, 31 also determine the distance the shield 20 extends beyond the face side 46 of the workpiece 40 being cleaned.

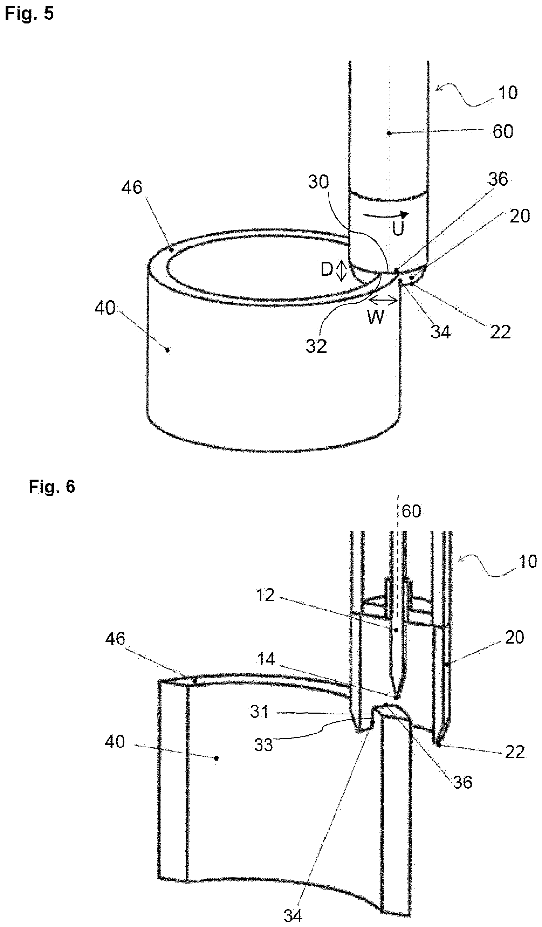

Figures 5 and 6 show the use of a shield having to recesses 30, 31 in the form of slots for cleaning a circular edge region 46 of a tubular workpiece 40. Also here said edge region 46 engages with the respective slot 30, 31 as described in conjunction with Figures 3 and 4 so that the shield 20 can be moved along the edge region 46 while the latter engages with the recesses 30, 31 at the same time in order to maintain proper coverage of the edge region 46 with a shielding gas during cathodic arc cleaning of the edge region 46. Due to the curvature of the edge region 46 of the workpiece, the slots 30, 31 can be formed in the shield 20 as to account for the curvature of the edge region 46 of the workpiece/tube 40.

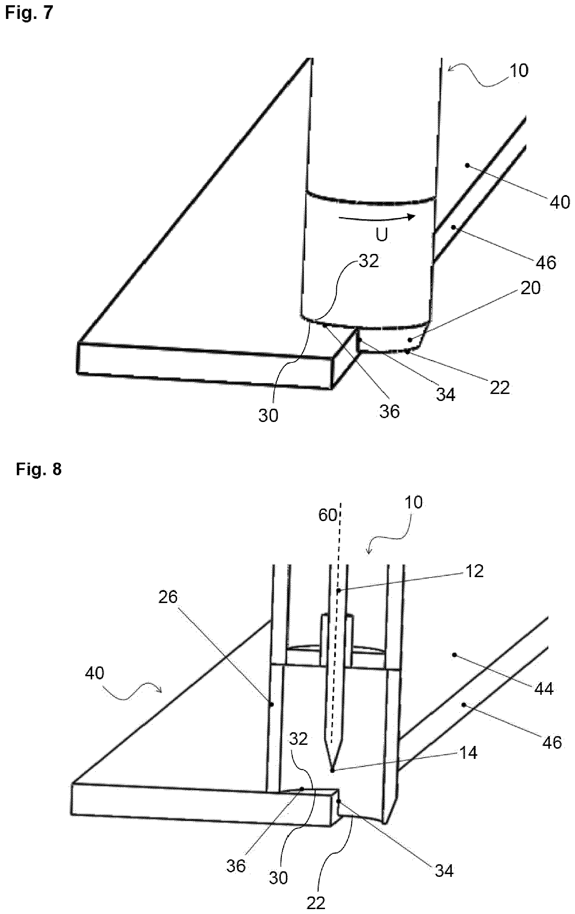

Furthermore, Figures 7 and 8 show a shield 20 of a further embodiment of a welding torch 10 according to the present invention, wherein here the shield 20 merely comprises a single recess 30 so as to engage an edge region of flat plate-like workpiece from the top of bottom side as indicated in Figures 7 and 8. In the peripheral direction U, the single recess 30 can comprise half of the edge region 22 of the shield 20. The transversal portion 36 can be the arc of a semi-circle.

With respect to cathodic arc cleaning, the welding torch 10 / shield 20 according to the present invention allows to efficiently clean edge regions 46 of workpieces, particularly to achieve sufficient coverage of the work area by a shielding gas. The same principles allow to achieve this coverage when welding T-joints for various angles enclosed by the workpieces to be connected.

**List of reference numerals**

| | |
|---|---|
| 10 | welding torch |
| 12 | Electrode |
| 14 | tip of electrode |
| 20 | Shield |
| 22 | edge region of the shield |
| 24 | Orifice |
| 30 | First Recess |
| 31 | Second recess |
| 32 | Section of edge region |
| 33 | Further section of edge region |
| 34 | longitudinal portion |
| 36 | transversal portion |
| 40 | Workpiece |
| 40a | surface (of the workpiece) |
| 46 | edge of the work piece |
| 48 | welding joint |
| 60 | centre axis |
| A | Acute angle |
| A' | Acute further angle |
| U | Peripheral direction |
| W | Width |
| D | Depth |
| E | Extension plane |
| E' | Further extension plane |

## Claims

1. A welding torch (10), comprising
- an electrode (12) extending along a centre axis (60), and
- a circumferential shield (20) which surrounds the electrode (12) and which is coaxially arranged with respect to the electrode (12), wherein the shield (20) comprises a circumferential edge region (22) that delimits an orifice (24) of the welding torch (10) through which a shield gas can be directed onto a work piece (40),
**characterized in that**
the shield (20) comprises at least a first recess (30) delimited by a section (32) of the edge region (22), wherein
- said section (32) of the edge region (22) comprises a transversal portion (36) extending in a peripheral direction (U) of the shield (20) and two longitudinal portions (34) connected via the transversal portion (36), which longitudinal portions (34) extend along the centre axis (60), or
- said section (32) of the edge region (22) is arch-shaped and comprises a concave curvature.

2. The welding torch according to claim 1, **wherein** the shield (20) comprises a second recess (31) delimited (defined) by a further section (33) of the edge region (22), wherein the second recess (31) faces the first recess (30) in a direction extending orthogonal to the centre axis (60).

3. The welding torch according claim 2, **wherein** the further section (33) of the edge region (22) comprises a transversal portion (36) extending in a peripheral direction (U) of the shield (20) and two longitudinal portions (34) connected via the transversal portion (36) of the further section (33), which longitudinal portions (34) of the further section (33) extend along the centre axis (60).

4. The welding torch according to one of the preceding claims, **wherein** said at least one first recess (30) forms a slot and/or said second recess (31) forms a slot.

5. The welding torch according to claim 2 or one of the claims 3 or 4 when referring to claim 2, **wherein** the first and the second recess (30, 31) comprise the same width (W) in the peripheral direction (U) of the shield (20) and/or the same depth (D) along the centre axis (60).

6. The welding torch according to one of the preceding claims, **wherein** the first recess (30) is configured to receive an edge region (46) of a workpiece (40) or wherein the two recesses (30, 31) are configured to receive an edge region (46) of a workpiece (40) so that the shield (20) can be translated along said edge region (46) of the workpiece (40) while maintaining engagement of edge region (46) of the workpiece (40) with the first recess (30) and/or with the second recess (31).

7. The welding torch according to one of the preceding claims, **wherein** the shield (20) is configured such that the shield (20) extends beyond the electrode (12) in a direction extending along the centre axis (60).

8. The welding torch according to claim 2, **wherein** the further section (33) of the edge region (22) is arch-shaped and comprises a concave curvature.

9. The welding torch according to one of the claims 1, 2 or 8, **wherein** said section (32) of the edge region (22) extends in an extension plane (E) that encloses an acute angle (A) with the centre axis (60) and/or wherein the further section (33) of the edge region (22) extends in a further extension plane (E') that encloses an acute further angle (A') with the centre axis (60).

10. The welding torch according to claim 9, **wherein** the acute angle (A) and the acute further angle (A') lie in the range from 25° to 75°, in particular in the range from 35° to 65°, in particular in the range from 40° to 50°.

11. The welding torch according to one of the claims 1 or 2, or according to one of the claims 8 to 10, **wherein** the shield (20) is configured such that the electrode (12) extends beyond the edge region (22) of the shield (20) in a direction extending along the centre axis (60).

12. A method for processing at least one workpiece (40) using a welding torch (10) according to one of the preceding claims, wherein the shield (20) of the welding torch (10) is positioned with respect to the at least one work piece (40) such that the at least one workpiece (40) engages with the at least one first recess (30) or such that said section (32) of the edge region (22) of the shield (22) extends along or parallel to a surface (40a) of the at least one workpiece (40), and wherein a shielding gas is discharged via the orifice (24) of the welding torch (10) onto the at least one workpiece (40), and an arc discharge is generated between electrode (12) and the at least one workpiece (40).

13. Method according to claim 12, wherein a non-consumable electrode is used for one of: welding with plus pole polarity, cathodic arc cleaning using direct current with the electrode having positive polarity, cleaning using direct current with the electrode having negative polarity.

14. Method according to claim 12 or 13, **characterised in that** the at least one workpiece (40) comprises an edge (46), wherein the edge (46) of the at least one workpiece (40) is processed by means of the arc and the shield (20) is moved along the edge (46) of the at least one workpiece (40) while an engagement of the edge (46) of the workpiece (40) with the at least one first recess (30) or while an engagement of the edge (46) of the workpiece (40) with the first recess (30) and the second recess (31) is maintained.

15. Method according to claim 12 or 13, **characterised in that** a first workpiece (40) and a second workpiece (40), that extend at an angle with respect to each other, particularly 90°, are welded to connect the workpieces (40) to one another, wherein each workpiece (40) comprises a surface (40a), wherein the angle is enclosed by the surfaces (40a), wherein the first recess (30) faces the surface (40a) of the first workpiece (40) and the second recess (31) faces the surface (40a) of the second workpiece (40).
